# DEMANDE DE BREVET EUROPEEN

(11) **EP 1 870 739 A1**
(43) Date de publication de la demande: **26.12.2007**
(21) Numéro de dépôt: 07011432.7
(22) Date de dépôt: 12.06.2007
(51) Int. Cl.: G02B 3/00

(54) **Procédé de fabrication de lentilles, notamment pour imageur comprenant un diaphragme**

(30) Priorité: 19.06.2006 FR 0605475
(71) Demandeur: STMicroelectronics (Rousset) SAS, 13790 Rousset (FR)
(72) Inventeur: Mionetto, Roberto, 83170 Tourves (FR)
(74) Mandataire: Marchand, André

(57) **Abrégé**

L'invention concerne un procédé de fabrication d'une lentille (L1) en matériau polymère, comprenant une étape consistant à réaliser dans le coeur de la lentille ou à la surface de celle-ci au moins une zone opaque (20) ayant une fonction optique, en dégradant localement la structure moléculaire du matériau polymère au moyen d'un faisceau de lumière laser (35). Application notamment aux imageurs CMOS.

## Description

La présente invention concerne la fabrication de lentilles optiques pour imageurs intégrés et notamment pour imageurs CMOS.

Les imageurs réalisés selon la technologie CMOS ("Complementary Metal Oxide Semiconductor") font actuellement l'objet d'un nombre croissant d'applications en raison de leur faible prix de revient comparativement aux imageurs CCD (Charge Coupled Device). De tels imageurs CMOS étaient initialement utilisés pour réaliser des capteurs d'image à faible résolution et de qualité médiocre (par exemple des caméras web). Aujourd'hui, après un important investissement en recherche et développement, les imageurs CMOS peuvent rivaliser avec les imageurs CCD. La présente invention s'inscrit dans un effort de perfectionnement de cette technologie d'imageurs visant une baisse des prix de revient à qualité égale.

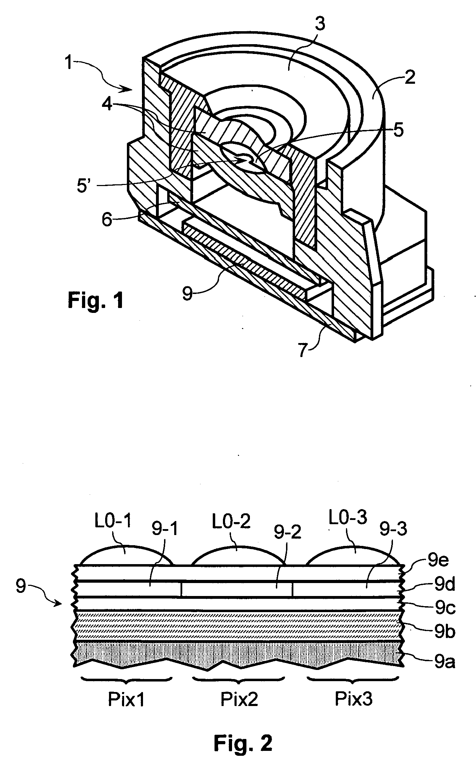

La figure 1 représente un exemple de micromodule 1 de capture d'images utilisant un imageur CMOS, destiné par exemple à être monté dans un appareil portatif tel qu'un téléphone mobile, un appareil photographique ou une caméra vidéo. Le micromodule 1 comprend un châssis 2, un bloc porte-lentille 3, une ou plusieurs lentilles 4 et un diaphragme 5 agencés dans le bloc 3, un filtre infrarouge 6 et un support 7. Un imageur CMOS 9 sous forme de microplaquette de semi-conducteur est disposé sur le support 7 de manière à recevoir la lumière passant au travers des lentilles 4, du diaphragme 5 et du filtre infrarouge 6.

Le diaphragme 5 est généralement formé par une fine plaquette de matière plastique opaque présentant un orifice central 5' laissant passer la lumière, présentant un diamètre fixe. Le filtre infrarouge 6 est généralement une plaquette de résine colorée. Il est également connu de réaliser le filtre infrarouge 6 en déposant à la surface d'une plaquette de verre des zones sombres (dépôt de chrome) formant un réseau de diffraction dont la géométrie est déterminée en fonction de la plage de longueurs d'ondes à filtrer.

L'imageur CMOS 9 comprend une pluralité de photosites formant chacun un pixel (non visibles sur la figure 1). Chaque pixel comprend une photodiode et un circuit de contrôle et d'interconnexion de la photodiode. Les pixels sont agencés de façon matricielle et une mosaïque de filtres rouges, verts, bleus est répartie au-dessus de la matrice de pixels, généralement selon l'architecture de Bayer (les cellules d'une ligne étant alternativement rouges et vertes ou alternativement vertes et bleues). Chaque pixel est ainsi recouvert par un filtre de couleur primaire déterminée, rouge, verte ou bleue, et fournit une information de luminance relative à la couleur primaire qui lui est attribuée, formant une information de pixel.

La figure 2 est une vue en coupe schématique de l'imageur 9 dans une région correspondant à trois pixels PIX1, PIX2, PIX3. En allant du bas vers le haut, on distingue des couches 9a, 9b, 9c, 9d, 9e et des microlentilles L0 (L0-1, L0-2, L0-3). La couche 9a est un substrat semi-conducteur dans lequel l'imageur est implanté. Cette couche comprend ainsi la partie active de l'imageur qui comporte notamment des photodiodes et leurs circuits de contrôle et d'interconnexion associés (non détaillés). La couche 9b est formée par un matériau diélectrique qui recouvre entièrement le substrat 9a. La couche 9c est une couche de passivation déposée sur l'imageur en fin de processus de fabrication CMOS. La couche 9d est formée par des résines colorées et comprend des secteurs 9-1, 9-2, 9-3 de couleur rouge, verte ou bleue formant les filtres de couleur primaire susmentionnés, à raison d'un filtre de couleur par pixel. La couche 9e est une couche de résine intermédiaire formant un support pour les microlentilles L0 et offrant une bonne planéité. Les microlentilles L0 sont agencées en une matrice dite "MLA" ("Microlens Array") à raison d'une microlentille par pixel.

La ou les lentilles 4 du bloc optique sont généralement formées dans des moules au moyen d'une résine polymère qui est retirée des moules après une étape de cuisson. Une autre technique connue de fabrication des lentilles 4 consiste en une impression de résine polymère sur un support puis fluage de la résine à chaud pour obtenir une face convexe (bombée).

Un tel micromodule de capture d'image présente l'inconvénient d'être d'une structure relativement complexe et de nécessiter un temps d'assemblage non négligeable, grevant sont prix de revient.

En particulier, le diaphragme 5 et le filtre infrarouge sont des composants supplémentaires nécessitant une ligne de fabrication dédiée et des étapes de stockage, de manutention et d'assemblage.

Un objectif général de la présente invention est de prévoir une structure de micromodule plus simple que la structure classique qui vient d'être décrite ainsi qu'un procédé de fabrication d'un micromodule de capture d'image qui comporte moins d'étapes d'assemblage.

Un objectif plus particulier de la présente invention est de prévoir un diaphragme qui soit plus simple à assembler que le diaphragme classique précédemment décrit.

Un objectif subsidiaire de la présente invention est de réaliser un filtre, notamment infrarouge, qui soit plus simple à assembler que le filtre infrarouge classique précédemment décrit.

Cet objectif est atteint par la prévision d'un procédé de fabrication d'une lentille en matériau polymère, caractérisé en ce qu'il comprend une étape consistant à réaliser dans ou sur la lentille au moins une zone opaque ayant une fonction optique, en dégradant localement la structure moléculaire du matériau polymère au moyen d'un faisceau de lumière laser.

Selon un mode de réalisation, le faisceau laser est appliqué à la lentille au moyen d'un dispositif à focale variable comprenant une lentille grand angle, permettant de choisir la distance entre la zone à dégrader et la surface de la lentille.

Selon un mode de réalisation, la zone opaque forme un diaphragme.

Selon un mode de réalisation, le procédé comprend une étape de réalisation d'une pluralité de zones opaques contiguës formant un réseau de diffraction ayant une fonction de filtre optique.

Dans un mode d'exécution du procédé, la zone opaque est réalisée au cours d'une étape de fabrication de la lentille où la lentille présente une face plane, en appliquant le faisceau laser sur la face plane.

La réalisation de la zone opaque peut également être suivie d'une étape d'arrondissement de la face plane de la lentille.

Selon un mode de réalisation, le procédé comprend une étape de fabrication d'au moins deux lentilles, une étape de réalisation d'au moins une zone opaque dans au moins l'une des deux lentilles, et une étape d'assemblage des deux lentilles pour former une lentille complexe.

L'invention concerne également un procédé de fabrication d'un micromodule de capture d'image intégré, comprenant : une étape de fabrication d'au moins un imageur sur un substrat de semi-conducteur, une étape de fabrication d'au moins une lentille, une étape de réalisation dans ou sur la lentille d'au moins une zone opaque conduite conformément au procédé selon l'invention, et une étape d'assemblage de la lentille directement sur le substrat semi-conducteur, sans utiliser un châssis porte-lentille.

L'invention concerne également un procédé de fabrication collective de micromodules optiques intégrés, comprenant : une étape de fabrication collective d'une pluralité d'imageurs sur un wafer de semi-conducteur, une étape de fabrication collective d'une pluralité de lentilles sur au moins une plaquette comportant une ou plusieurs couches d'un matériau polymère et formant un wafer de lentilles, une étape de réalisation d'au moins une zone opaque dans ou sur des lentilles de la pluralité de lentilles, conduite conformément au procédé selon l'invention, une étape d'assemblage du wafer de lentilles et du wafer de semi-conducteur, de manière que chaque lentille se trouve en face d'un imageur, et une étape de découpe de l'assemblage pour obtenir une pluralité de micromodules optiques intégrés.

L'invention concerne également une lentille en matériau polymère, comprenant au moins une zone opaque ayant une fonction optique, la zone opaque étant une zone où le matériau polymère présente une structure moléculaire dégradée.

Selon un mode de réalisation, la lentille comprend une zone opaque ayant une fonction de diaphragme.

Selon un mode de réalisation, la lentille comprend une pluralité de zones opaques contiguës formant un réseau de diffraction ayant une fonction de filtre optique.

Selon un mode de réalisation, la lentille comprend deux faces planes, une face plane et une face convexe ou concave, ou deux faces convexes.

Selon un mode de réalisation, la lentille comprend deux couches de matériau polymère assemblées l'une contre l'autre, au moins l'une des couches comprenant au moins une zone opaque ayant une fonction optique.

Selon un mode de réalisation, chaque couche présente une face convexe et les faces convexes de chaque couche sont agencées face à face pour former une cavité lenticulaire.

L'invention concerne également un micromodule de capture d'image, comprenant un imageur sur un substrat de semi-conducteur et au moins une lentille selon l'invention.

Selon un mode de réalisation, la lentille est collée sur l'imageur sans châssis porte-lentille.

Ces objets, caractéristiques et avantages ainsi que d'autres de la présente invention seront exposés plus en détail dans la description suivante d'un mode de réalisation de l'invention, faite à titre non limitatif en relation avec les figures jointes parmi lesquelles :
- la figure 1 précédemment décrite représente un bloc d'imageur CMOS classique,
- la figure 2 précédemment décrite est une vue en coupe d'une microplaquette d'imageur CMOS classique,
- les figures 3A, 3B, 3C sont des vues en coupe représentant respectivement une étape de formation d'un diaphragme dans une lentille de type plan convexe conformément au procédé de l'invention, une vue dilatée de la zone opaque en cours de formation, et la lentille obtenue,
- les figures 4A, 4B sont des vues en coupe représentant respectivement une étape de formation d'un diaphragme dans une lentille de type ménisque convergent conformément au procédé de l'invention, et la lentille obtenue,
- la figure 5 est une vue en coupe d'un autre exemple de lentille comprenant un diaphragme selon l'invention,
- les figures 6A, 6B sont des vues en coupe d'une lentille de type plan convexe et d'une lentille de type ménisque convergent comprenant chacune un filtre infrarouge selon l'invention,
- les figures 7A, 7B sont des vues en coupe d'une plaquette à face parallèle comprenant un diaphragme selon l'invention et d'une plaquette à face parallèle comprenant un filtre infrarouge selon l'invention,
- les figures 8 et 9 représentent des exemples d'assemblages de lentilles selon l'invention,
- la figure 10 est une vue de dessus d'un wafer de semi-conducteur comprenant des imageurs,
- les figures 11A, 11B sont des vues en coupe et de dessus d'un wafer de lentilles comprenant des lentilles selon l'invention,
- la figure 12 est une vue en coupe d'un assemblage du wafer d'imageur de la figure 10 et du wafer de lentilles des figures 11A, 11B,
- les figures 13A à 13E sont des vues en coupe illustrant des étapes de fabrication du wafer de lentilles,
- les figures 14A, 14B sont des vues en coupe de deux wafers de lentilles selon l'invention, et
- la figure 15 est une vue en coupe d'un assemblage du wafer de semi-conducteur de la figure 10 et des wafers de lentilles représentés sur les figures 14A, 14B.

L'invention se fonde sur l'idée d'utiliser dans le domaine de l'industrie optique une technique utilisée dans l'art antérieur pour réaliser des motifs décoratifs dans des objets en matériau polymère (notamment en polycarbonate).

La présente invention prévoit plus particulièrement d'utiliser une technique de gravure laser similaire pour former une ou plusieurs zones opaques dans ou sur une lentille en matériau polymère, et obtenir ainsi une fonction optique.

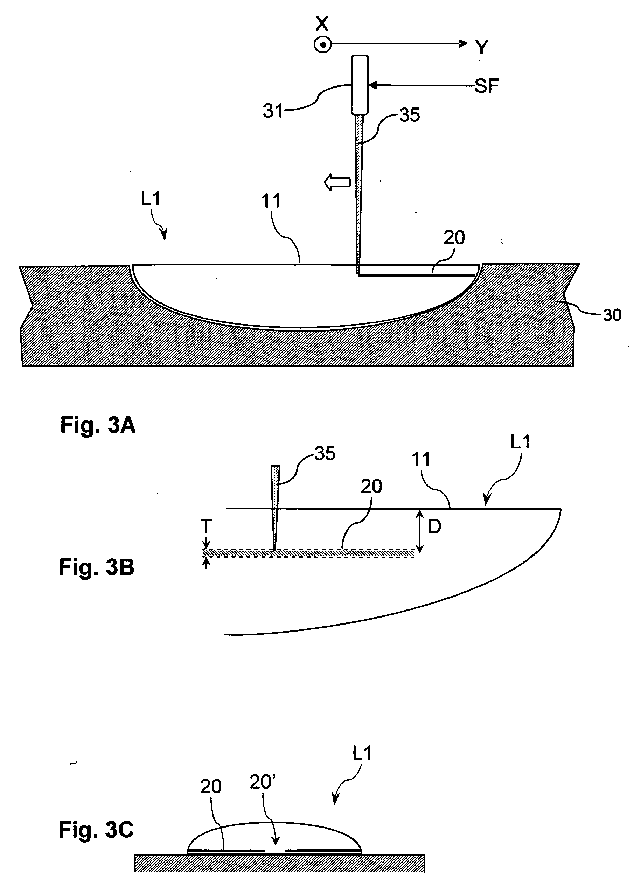

On réalise par exemple un diaphragme plat 20 dans la masse d'une lentille L1 de type plan convexe, sous la face plane 11 de celle-ci, comme représenté sur les figures 3A, 3B, 3C. Le diaphragme 20 consiste en une zone opaque couvrant toute l'aire de la lentille L1 sauf en une zone centrale 20' formant une ouverture pour le passage de la lumière (fig. 3B).

Comme illustré sur la figure 3A un faisceau laser 35 est appliqué à la lentille L1, perpendiculairement à la face plane 11. La lentille L1 est posée sur un support 30, par exemple le moule au moyen duquel elle a été réalisée. Le laser 35 passe préalablement au travers d'un dispositif de focalisation 31 motorisé ayant une distance focale variable ajustée par un signal électrique SF. L'ajustement de la distance focale permet de contrôler la profondeur du point d'impact du laser, c'est-à-dire le point d'énergie maximale entraînant la dégradation du matériau constitutif de la lentille. Ce matériau est par exemple du polycarbonate.

Un déplacement horizontal dans les directions X et Y du support 30 relativement au faisceau laser 35 permet de balayer toute la zone 20 afin de dégrader les propriétés du matériau polymère et le rendre opaque, sauf dans la région d'ouverture 20'. Le laser 35 est de préférence un laser femtoseconde (laser à impulsions ultracourtes), par exemple d'une longueur d'onde de 248 nm (faisceau non visible). Une impulsion laser femtoseconde concentre l'énergie disponible dans un temps court, la puissance atteinte étant d'autant plus grande que l'impulsion est courte. Les lasers femtoseconde actuels atteignent la dizaine de femtosecondes (une femtoseconde = 10⁻¹⁵ s, soit un millionième de milliardième de seconde), et une cadence de 1000 impulsions par seconde peut être atteinte. L'avantage d'un laser femtoseconde est que la zone dite thermiquement affectée est très réduite, contrairement aux lasers nanoseconde. En effet l'interaction entre le laser et la matière en mode femtoseconde est athermique et la dégradation du matériau est localisée. Le faisceau laser n'altère donc aucunement le reste de la lentille.

Comme illustré sur la figure 3B, la zone de dégradation 20 est ainsi d'une épaisseur T faible et de l'ordre du micromètre, et se situe à une distance D de la face plane de la lentille L1, qui peut être de l'ordre du dixième de millimètre à plusieurs dixièmes de millimètres selon le réglage de la distance focale du dispositif de focalisation 31.

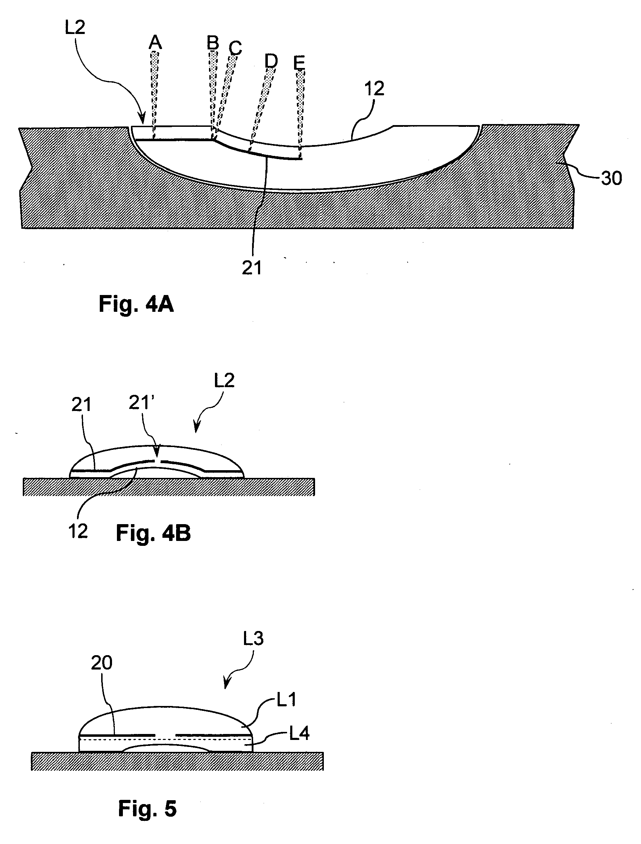

La figure 4A illustre une étape de réalisation d'un diaphragme concave 21 dans une lentille L2 de type ménisque convergent, ayant une face convexe et une face concave 12. La lentille L2 est comme précédemment agencée dans son moule 30 ou un support approprié. Le faisceau laser est comme précédemment appliqué sur la face 12, avec un angle d'incidence perpendiculaire à celle-ci. Sur la figure 4A sont représentées différentes positions A, B, C, D, E du laser présentant des angles d'incidence différents relativement à un plan horizontal mathématique et correspondant à un angle d'incidence constant relativement à la face 12 de la lentille. La forme finale du diaphragme concave 21 est représentée sur la figure 4B, chaque partie de la zone dégradée se situant à une distance constante de la face 12. Le diaphragme présente un orifice central 21' où le matériau polymère n'a pas été dégradé. Un diaphragme plat peut également être réalisé en prévoyant un asservissement de la distance focale du dispositif de focalisation 31 en fonction de la position du laser sur la face concave 12.

La figure 5 est une vue en coupe d'une lentille L3 de type ménisque convergent comprenant le diaphragme plat 20 déjà décrit. La lentille est formée par assemblage de la lentille plan convexe L1 déjà décrite, pourvue du diaphragme 20, et d'une lentille L4 de type plan concave. L'assemblage des lentilles L1, L4 est effectué en collant la face plane de la lentille L4 sur la face plane de la lentille L1, au moyen d'une fine couche de colle (époxy, uréthane, silicone...) ayant un indice optique identique ou proche du matériau polymère formant les lentilles L1, L4.

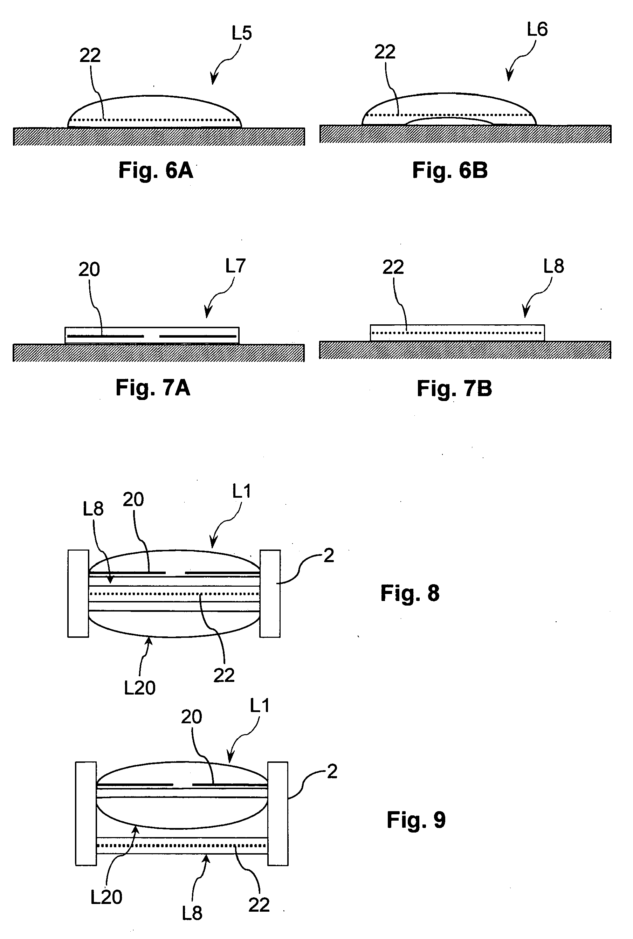

De façon générale, le procédé selon l'invention permet de réaliser dans ou sur une lentille toute fonction optique pouvant être obtenue en opacifiant le matériau localement. Par exemple, un réseau de diffraction 22 est réalisé dans une lentille L5 de type plan convexe représentée sur la figure 1A et dans une lentille L6 de type ménisque convergent représentée sur la figure 6B. Le réseau 22 comprend une pluralité de zones opaques parallèles et contiguës obtenues comme précédemment par dégradation localisée du matériau polymère. Le réseau forme un filtre interférentiel à une ou plusieurs bandes passantes étroites ou larges, par exemple un filtre à bande large couvrant le domaine de l'infrarouge.

Le terme "lentille" est compris ici dans son acception la plus générale et inclut des lames à faces parallèles. Ainsi, la figure 7A représente une lame à faces parallèles L7 en matériau polymère dans laquelle a été formé le diaphragme plat 20 et la figure 7B représente une lame à faces parallèles L8 dans laquelle a été formé le réseau de diffraction 22.

Comme représenté sur les figures 8 et 9, des assemblages de lentilles selon l'invention permettent de réaliser des blocs optiques d'une structure plus simple que dans l'art antérieur. Sur la figure 8, le châssis 2 d'un micromodule de capture d'image reçoit la lentille L1 équipée de son diaphragme intégré 20, une lentille classique L20 de type plan convexe, et la lame L8 équipée de son réseau de diffraction intégré 22. La lame L8 est prise en sandwich entre les faces plates des lentilles L1, L20. Sur la figure 9, les lentilles L1 et L20 sont agencées face à face et la lame L8 est agencée sous la face convexe de la lentille L20.

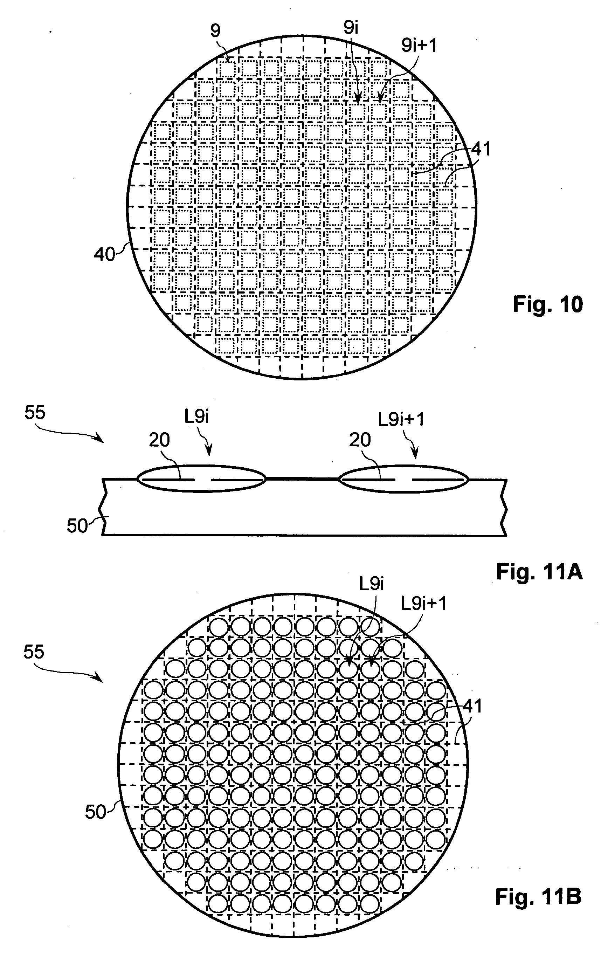

Les figures 10, 11A, 11B, 12 illustrent un procédé de fabrication de micromodules de capture d'image par assemblage d'un wafer de silicium comprenant une pluralité d'imageurs et d'un "wafer de lentilles" comprenant une pluralité de lentilles.

La figure 10 est une vue de la face avant d'un wafer de silicium 40 comprenant une pluralité de régions actives 9 (9i, 9i+1...) formant chacune un imageur tel que celui représenté sur la figure 2. Les imageurs 9 ont été réalisés collectivement sur le wafer en utilisant les techniques de la microélectronique, notamment par implantation de dopants, dépôt et/ou croissance d'oxyde et dépôt et/ou croissance de divers matériaux (métal, polysilicium, matériau diélectrique, matériau de passivation, dépôt de résines colorées (microlentilles), etc.

Dans l'art antérieur, le wafer 40 est découpé en microplaquettes comprenant chacune un imageur, et les microplaquettes sont ensuite assemblées dans des blocs optiques comme décrit au préambule. Cette opération de découpe du wafer en "dés", ou singulation, est généralement réalisée avec une scie diamantée, en suivant des chemins de découpe 41 représentés en traits pointillés et formant un quadrillage à la surface du wafer.

Selon l'invention, l'assemblage des imageurs avec des lentilles est réalisé avant la découpe du wafer 40. A cet effet, des lentilles L9 (L9i, L9i+1, ...), ici de type biconvexe, sont réalisées collectivement sur la face avant d'une plaquette transparente 50 pour obtenir le "wafer de lentilles" 55 vu en coupe sur la figure 11A et de dessus sur la figure 11B. Les lentilles L9 sont disposées sur la plaquette 50 selon un agencement matriciel (en lignes et en colonnes) ayant un pas identique à celui des imageurs du wafer 40, et présentant des chemins de découpe 41 identiques.

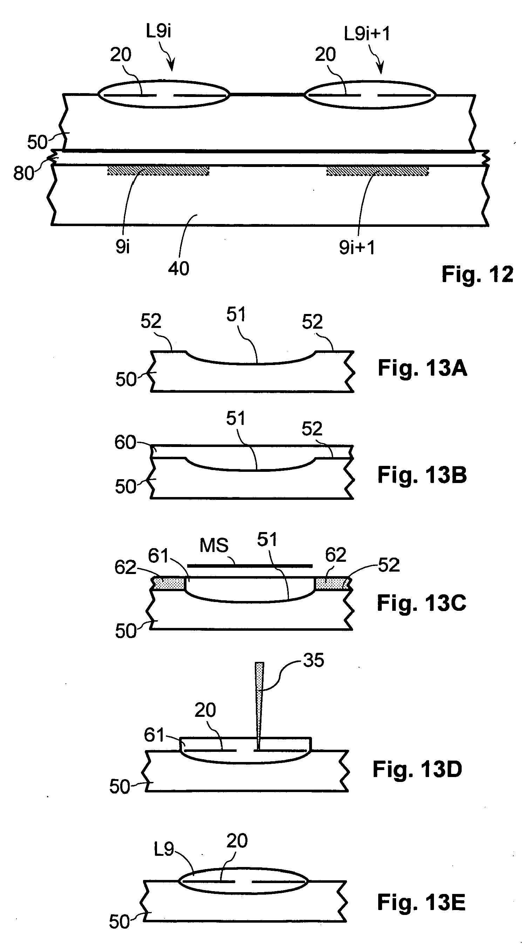

Comme représenté sur la figure 12, le wafer de lentilles 55 est ensuite assemblé sur le wafer d'imageurs 40 en collant la face arrière de la plaquette 50 sur la face avant du wafer 40 par l'intermédiaire d'une couche de colle 80 (époxy, uréthane, silicone...) et en centrant chaque lentille L9 sur un imageur 9 de rang matriciel correspondant.

L'ensemble formé par le wafer 40 et le wafer de lentilles 50 est ensuite découpé en microplaquettes individuelles, en suivant les chemins de découpe 41. Chaque microplaquette ainsi obtenue forme un module de capture d'image intégré, comprenant un imageur et sa lentille associée. L'étape de singulation des deux wafers est par exemple réalisée avec une scie diamantée, en suivant des chemins de découpe 41.

Comme cela apparaît sur les figures 11A, et 12, chaque lentille L9 du wafer de lentilles comprend un diaphragme 20 réalisé conformément au procédé de l'invention.

Les figures 13A à 13E illustrent un exemple de procédé de fabrication des lentilles L9, incluant une étape de formation du diaphragme 20.

La plaquette 50 est formée dans un moule au moyen d'une résine polymère transparente et est retirée du moule après une étape de cuisson. Le moule est conformé de manière que la face avant de la plaquette 50 (après retournement de la plaquette) présente des cuvettes 51 séparées par des zones planes 52 correspondant aux chemins de découpe, comme représenté sur la figure 13A.

Au cours d'une étape illustrée sur la figure 13B, la face avant de la plaquette 50 est recouverte d'une couche 60 de résine polymère transparente photosensible, déposée sous forme liquide, étalée par enduction centrifuge ("spin coating") puis soumise à une étape de cuisson.

Au cours d'une étape illustrée sur la figure 13C, la couche de résine 60 est exposée à une lumière ultraviolette avec interposition d'un masque d'insolation MS qui protège de la lumière des zones 61 de la couche 60 se trouvant au dessus des cuvettes 51, tandis que des zones 62 se trouvant au dessus des zones 52 de la plaquette 50 sont exposées à la lumière.

Les zones exposées 62 sont ensuite retirées avec un solvant organique, pour obtenir une matrice de pastilles plan convexe 61 dont la face inférieure a une forme convexe correspondant à la forme concave des cuvettes 51.

Au cours d'une étape illustrée sur la figure 13D, un diaphragme 20 est réalisé dans chaque lentille 61, au moyen du laser 35 et en passant par la face plane de chaque lentille, comme décrit plus haut en relation avec les figures 3A, 3B.

Au cours d'une étape illustrée sur la figure 13E, les lentilles plan convexe 61 sont soumises à une température déterminée pour subir un fluage thermique qui transforme leur face avant plate en une face convexe, de sorte que l'on obtient les lentilles biconvexes L9. Une opération finale de recuit permet d'assurer leur durcissement.

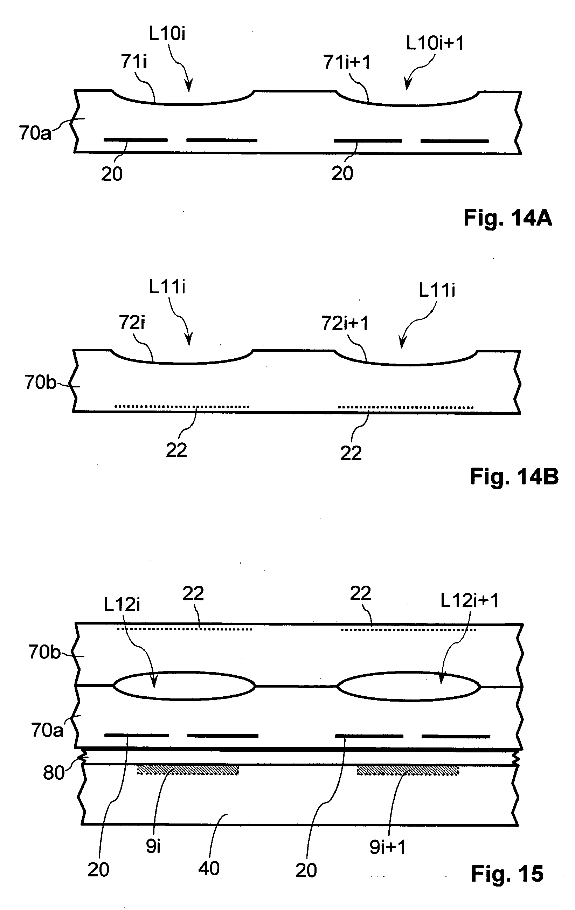

Les figures 14A, 14B et 15 représentent un autre mode de réalisation d'un wafer de lentilles à coller sur le wafer d'imageurs 40 (fig. 10). Le wafer de lentilles est ici réalisé par assemblage de deux plaquettes de lentilles 70a, 70b représentées respectivement sur les figures 14A et 14B.

La plaquette 70a a été formée dans un moule au moyen d'une résine polymère transparente et a été retirée du moule après une étape de cuisson. La face avant de la plaquette 70a présente des cuvettes 71 (71i, 71i+1...) séparées par des zones planes correspondant aux chemins de découpe. La face arrière de la plaquette 70a est plane et forme avec chaque cuvette 71 (71i, 71i+1...) une lentille L10 de type plan concave (L10i, L10i+1...). A l'intérieur de chaque lentille L10 a été réalisé un diaphragme 20 selon l'invention, en appliquant un laser sur la face arrière. Le diaphragme 20 de chaque lentille se trouve ainsi du côté de la face arrière de la plaquette 70a, au droit chaque cuvette 71.

La plaquette 70b a été également formée dans un moule au moyen d'une résine polymère transparente et sa face avant présente également des cuvettes 72 (72i, 72i+1...) séparées par des zones planes correspondant aux chemins de découpe. Bien que représentées ici identiques aux cuvettes 71, les cuvettes 72 présentent une courbure qui n'est pas nécessairement identique à celle des cuvettes 71 et qui est déterminé par le concepteur en fonction des propriétés optiques souhaitées pour le wafer de lentilles. La face arrière de la plaquette 70b est plane et forme avec chaque cuvette 72 une lentille L11 de type plan concave (L11i, L11i+1...). A l'intérieur de chaque lentille L11 a été réalisé un réseau de diffraction 22 selon l'invention formant un filtre infrarouge, en appliquant un laser sur la face arrière. Le filtre infrarouge 22 de chaque lentille se trouve ainsi du côté de la face arrière de la plaquette 70b, au droit de chaque cuvette 72.

Chaque plaquette 70a, 70b présente un indice optique choisi en fonction des propriétés optiques souhaitées des lentilles à réaliser.

Comme illustré sur la figure 15, les deux plaquettes 70a, 70b sont assemblées l'une contre l'autre, chaque lentille L10 de la plaquette 70a étant disposée en face d'une lentille L11 de la plaquette 70b, de manière à délimiter des cavités de forme lenticulaire L12 (L12i, L12i+1...). Les deux plaquettes 70a, 70b sont fixées l'une à l'autre par un moyen approprié, tel qu'une colle transparente.

Préalablement à la fixation des plaquettes 70a, 70b, les cavités lenticulaires peuvent être remplies avec un matériau transparent ayant un indice optique choisi en fonction des propriétés optiques souhaitées des lentilles.

Une fois assemblées, les plaquettes 70a, 70b sont fixées sur le wafer 40 avec une couche de colle transparente 80, comme précédemment. L'épaisseur de la couche de colle est suffisante pour éviter que la plaquette 70b soit en contact avec les microlentilles des imageurs. La couche de colle 80 est par exemple déposée par enduction centrifuge.

La plaquette 70a peut également être assemblée sur le wafer 40 avant d'être assemblée à la plaquette 70b.

Comme précédemment, l'ensemble formé par le wafer 40 et les plaquettes 70a, 70b est ensuite découpé en microplaquettes individuelles formant chacune un module de capture d'image intégré.

Il apparaîtra clairement à l'homme de l'art que le procédé selon l'invention est susceptible de divers autres modes de réalisation. Les exemples de wafer de lentilles décrits ci-dessus laissent entrevoir de nombreux autres modes de réalisation de lentilles. Il est envisageable par exemple d'assembler plusieurs plaquettes transparentes pour obtenir une combinaison de lentilles complexes. Également, la zone opaque n'est pas nécessairement réalisée en profondeur, comme décrit plus haut, et peut être réalisée en surface, en focalisant le faisceau laser sur la surface de la lentille.

Il apparaîtra également à l'homme de l'art que la présente invention est susceptible de diverses applications. Ainsi, la présente invention ne s'applique pas uniquement aux imageurs CMOS, mais plus généralement à tout imageur comprenant un capteur d'image intégré sur un wafer semi-conducteur, tel que les imageurs CCD.

## Revendications

1. Procédé de fabrication d'une lentille (L1, L2, L3, L5, L6, L7, L8, L9, L10, L11) en matériau polymère, **caractérisé en ce qu'**il comprend une étape consistant à réaliser dans ou sur la lentille au moins une zone opaque (20, 21, 22) ayant une fonction optique, en dégradant localement la structure moléculaire du matériau polymère au moyen d'un faisceau de lumière laser (35).

2. Procédé selon la revendication 1, dans lequel le faisceau laser (35) est appliqué à la lentille au moyen d'un dispositif à focale variable (31) comprenant une lentille grand angle, permettant de choisir la distance entre la zone à dégrader et la surface (11, 12) de la lentille.

3. Procédé selon l'une des revendications 1 et 2, dans lequel la zone opaque (20, 21) forme un diaphragme.

4. Procédé selon l'une des revendications 1 à 3, comprenant une étape de réalisation d'une pluralité de zones opaques contiguës formant un réseau de diffraction (22) ayant une fonction de filtre optique.

5. Procédé selon l'une des revendications 1 à 4, dans lequel la zone opaque est réalisée au cours d'une étape de fabrication de la lentille (L1, L5, L7, L8, L9, L10, L11) où la lentille présente une face plane, en appliquant le faisceau laser sur la face plane.

6. Procédé selon la revendication 5, dans lequel la réalisation de la zone opaque est suivie d'une étape d'arrondissement de la face plane de la lentille (L9).

7. Procédé selon l'une des revendications 1 à 5, comprenant une étape de fabrication d'au moins deux lentilles (L1, L4, L8, L10, L11, L20), une étape de réalisation d'au moins une zone opaque (20, 22) dans au moins l'une des deux lentilles,' et une étape d'assemblage des deux lentilles pour former une lentille complexe.

8. Procédé de fabrication d'un micromodule de capture d'image intégré, **caractérisé en ce qu'**il comprend :
- une étape de fabrication d'au moins un imageur (9) sur un substrat de semi-conducteur (40),
- une étape de fabrication d'au moins une lentille (L9, L10, L11)
- une étape de réalisation dans ou sur la lentille d'au moins une zone opaque (20, 22) conduite conformément au procédé selon l'une des revendications 1 à 7, et
- une étape d'assemblage de la lentille (L9, L10, L11) directement sur le substrat semi-conducteur (40), sans utiliser un châssis porte-lentille.

9. Procédé de fabrication collective de micromodules optiques intégrés, **caractérisé en ce qu'**il comprend :
- une étape de fabrication collective d'une pluralité d'imageurs (9) sur un wafer de semi-conducteur (40),
- une étape de fabrication collective d'une pluralité de lentilles (L9, L10, L11) sur au moins une plaquette (50, 70a, 70b) comportant une ou plusieurs couches d'un matériau polymère et formant un wafer de lentilles,
- une étape de réalisation d'au moins une zone opaque (20, 22) dans ou sur des lentilles de la pluralité de lentilles, conduite conformément au procédé selon l'une des revendications 1 à 7, et
- une étape d'assemblage du wafer de lentilles et du wafer de semi-conducteur, de manière que chaque lentille se trouve en face d'un imageur, et
- une étape de découpe de l'assemblage pour obtenir une pluralité de micromodules optiques intégrés.

10. Lentille (L1, L2, L3, L5, L6, L7, L8, L9, L10, L11) en matériau polymère, **caractérisée en ce qu'**elle comprend au moins une zone opaque (20, 21, 22) ayant une fonction optique, la zone opaque étant une zone où le matériau polymère présente une structure moléculaire dégradée.

11. Lentille selon la revendication 1, comprenant une zone opaque (20, 21) ayant une fonction de diaphragme.

12. Lentille selon l'une des revendications 1 et 2, comprenant une pluralité de zones opaques contiguës formant un réseau de diffraction (22) ayant une fonction de filtre optique.

13. Lentille (L7, L8) selon l'une des revendications 10 à 12, comprenant deux faces planes.

14. Lentille (L1, L5, L6, L10, L11) selon l'une des revendications 10 à 12, comprenant une face plane et une face convexe ou concave.

15. Lentille (L9) selon l'une des revendications 10 à 12, comprenant deux faces convexes.

16. Lentille (L3, L12) selon l'une des revendications 10 à 12, comprenant deux couches (L1, L4, 70a, 70b) de matériau polymère assemblées l'une contre l'autre, au moins l'une des couches comprenant au moins une zone opaque (20, 22) ayant une fonction optique.

17. Lentille (L12) selon la revendication 16, dans laquelle chaque couche présente une face convexe (71, 72) et les faces convexes de chaque couche sont agencées face à face pour former une cavité lenticulaire (L12).

18. Micromodule de capture d'image, **caractérisé en ce qu'**il comprend un imageur (9) sur un substrat de semi-conducteur (40), et au moins une lentille (L1, L8, L9, L10, L11) selon l'une des revendications 10 à 17.

19. Micromodule selon la revendication 17, dans lequel la lentille (L9, L10, L11) est collée sur l'imageur sans châssis porte-lentille.
